# EUROPEAN PATENT SPECIFICATION

(11) **EP 1 809 463 B1**
(45) Date of publication and mention of the grant of the patent: **10.09.2008**
(21) Application number: 05802962.0
(22) Date of filing: 21.10.2005
(51) Int. Cl.: B29C 45/14, B29C 70/86

(54) **ARTICLE HAVING AN INTEGRATED STRUCTURE OF COMPOSITE MATERIAL AND THERMOPLASTIC OR ELASTOMER MATERIAL AND PROCESS FOR THE PRODUCTION OF THE SAID ARTICLE**
ARTIKEL MIT INTEGRIERTER STRUKTUR AUS VERBUNDMATERIAL UND THERMOPLASTISCHEM ODER ELASTOMEREM MATERIAL UND VERFAHREN ZUR HERSTELLUNG DES ARTIKELS
ARTICLE A STRUCTURE INTEGREE DE MATERIAU COMPOSITE ET DE MATERIAU THERMOPLASTIQUE OU ELASTOMERE, ET PROCEDE DE PRODUCTION

(30) Priority: 02.11.2004 IT PD20040269
(43) Date of publication of application: 25.07.2007
(73) Proprietor: Novation S.p.A., 31044 Montebelluna (Treviso) (IT)
(72) Inventor: SARTOR, Leo, I-31044 Montebelluna TV (IT); BOZZETTO, Valter, I-31025 Santa Lucia Di Piave TV (IT)
(74) Representative: Susanetto, Carlo
(86) International application number: PCT/IT2005/000614
(87) International publication number: WO 2006/048908

(56) References cited:
- EP-A- 0 558 009
- EP-A- 0 795 280
- EP-A- 0 803 351
- WO-A-95/30707
- US-A- 4 925 511
- US-A1- 2002 092 207

## Description

### Technical field

This invention relates to an article having an integrated structure of composite material and thermoplastic or elastomer material coupled together in accordance with the characteristics mentioned in the precharacterising clause of the principal claim. It likewise relates to a process for the production of such an article in accordance with the characteristics mentioned in the precharacterising clause of independent claim no. 20.

### State of the art

In the production of articles in which high level mechanical properties are required, the use of materials comprising a polymer matrix reinforced with fibres of stronger materials, such as carbon fibres, mineral fibres, glass fibres, etc., is known.

A first type of such materials provides that the polymer matrix is charged with fibres of short length, up to a maximum percentage of approximately 40%. A second type of such materials instead provides that the fibres should be present in a percentage of 50% or more, and are of the continuous, unidirectional type, or in the form of a fabric.

Materials belonging to this latter family have mechanical properties, and in particular the elastic modulus values, which are higher than those of the materials in the first family, and represent the materials of interest in this application. They will be identified in this context using the term composite materials.

However these composite materials are not always capable of responding to all the requirements made of a product, as a result of which they must in some cases be coupled with a thermoplastic or elastic material.

The first such case arises when the article or a portion thereof must also offer good elongation, deformability, abrasion resistance and impact resistance properties, properties which are generally lacking in the composite material.

The second situation arises when the article has a relatively complex geometry, in which cross-sections vary suddenly and discontinuously. In the latter case the production of such articles using only composite materials is complicate, costly, and does not always fulfil the intended aims.

Of course such articles cannot be manufactured of thermoplastic or elastomer material alone without diminishing the elastic modulus, lightness and other advantageous properties of the composite materials.

Articles comprising composite materials coupled with thermoplastic or elastomer materials have or may have uses in a variety of technical fields from the sports sector, for example in the manufacture of components and accessories for cycling, motorcycling and skiing, to the motor industry, for example in the manufacture of components, to the more general sectors of travel goods and footwear.

The most common procedure for manufacturing articles of this type provides for separate manufacture of the portion of composite material and the portion of thermoplastic or elastic material by injection moulding. The two portions are then coupled together by adhesive bonding or riveting. This however results in an undesirable discontinuity in the mechanical properties of the final article, in addition to which there is the disadvantage that it requires a large number of stages in manufacture with a consequent increase in production times and costs.

Another production technique, described for example in European patent no. 547625 in the name of Sumitomo Chemicals, discloses the provision of a first portion of composite material and directly overinjecting onto it a suitable quantity of thermoplastic material to form the second portion of the final article.

This technique is specifically taught for the production of articles in which the first portion of composite material is in the form of a sheet and the second portion of thermoplastic material projects from the first portion (for example in the form of appendages).

Articles of this type do however have some disadvantages, including often unsatisfactory adhesion between the structural portion and the bodies projecting from it, caused by poor compatibility between the thermoplastic material and the composite material, which does not provide a sufficiently lasting bond on the usually small surface area of contact between the two components.

This limitation is particularly relevant when the second portion of thermoplastic or elastomer material is of substantial thickness. In this case in fact the dimensional shrinkage to which the second portion is subject after injection moulding is often the cause of deformation which may also result in detachment of the two portions.

Because of these disadvantages, especially poor adhesion, which is found most relevant in cases where the polymer matrix of the composite material is of the thermosetting type, the direct overinjection technique is little used unless primer or surface treatment is applied prior to overinjection.

Another technique for the production of articles of composite material coupled with thermoplastic material is described in international patent application no. 2004/067246 in the name of VEC Technology. This technique provides for the coupling of a layer of composite material and a thermoplastic film obtained by extrusion, which does not however make it possible to obtain articles of complex geometry.

WO 95/30707, EP 558009 and EP 803351 disclose articles having the features outlined in the preamble of the main claim.

### Disclosure of the invention

The problem underlying this invention is that of providing an article with an integrated structure manufactured from composite material and thermoplastic or elastomer material and a process for the production of such an article which is structurally and functionally designed to overcome the limitations mentioned above with reference to the cited prior art.

In the context of this problem a first object of the invention is to provide an article which offers improved mechanical properties in comparison with the articles manufactured according to the prior art.

A second object of the invention comprises making a process of production available for an article having an integrated structure which is simple to implement, of low cost and which requires a smaller number of operating stages.

This problem is resolved and these objects are accomplished by this invention through an article having an integrated structure and a production process therefor according to the claims below.

Articles manufactured according to this invention comprise a first portion made of composite material, forming the structural portion of the article, to which is coupled at least one second portion made of thermoplastic or elastomer material by moulding, coupled to the first portion.

According to a first aspect of the invention, a polymer film made of material which is compatible with the materials comprising the first and second portion is placed between the first and second portion so as to improve the bond between them.

The polymer matrix constituting the composite material of the first portion may be of the thermosetting type, for example based on epoxy or polyester, or may be the thermoplastic type, for example based on polyethylene, polypropylene, polyvinyl chloride and other polyolefins, which may be substituted, polyamides, polyesters, polyurethanes or copolymers such as for example ABS.

Preferably this polymer matrix is of the thermosetting type and more preferably is epoxy-resin-based because of the better mechanical properties available.

Fibres commonly used in the sector in question may be used as reinforcing fibres, whether these are inorganic fibres, such as for example glass fibre, carbon fibre or mineral fibres, or organic fibres, such as aramide fibre. The fibres are of the continuous type and are worked in such a way as to be substantially unidirectional or are woven on the basis of a warp and weft arrangement (fabric). The fraction of fibres by weight within the composite material also preferably lies between 50% and 70%.

Advantageously the first portion may have a sheet-like configuration, this term indicating a body having two dimensions which are appreciably greater than the third. In addition to this, this third dimension may have a substantially constant value, as a result of which it would be referred to as a portion of constant cross-section.

The second portion is manufactured by moulding thermoplastic material, selected for example from polymer mixtures based on polyamide, polyester, polyolefin, substituted polyolefin or polyurethane, or based on copolymers such as ABS, or elastomer material such as for example elastomers based on polyurethane, polyolefin or vulcanised rubber.

Generally moulding takes place through injection of the preselected material, but it is similarly provided that this may be obtained by casting, particularly in the case where such material is a two-component polyurethane. Thus where in the remainder of the description the term "injection" or "injection moulding" is used for brevity it shall be likewise understood to also include the technique of moulding by casting where the thermoplastic or elastomer material is compatible with that technique.

In general articles according to this invention do not have an overall constant cross-section and this is mainly due to the fact that the second portion may comprise a body projecting from the first portion, or the fact that the second portion itself has a variable cross-section.

The film placed between the first and the second portion has among other things the important function of improving bonding between them. Bonding between the film and the first and second portion is measured by means of a suitable standard test according to which layers of different materials coupled together are subjected to a load tending to detach such layers. In this context two materials are regarded as being chemically compatible as far as bonding is concerned when they have a detachment strength of more than 2 kg/cm.

The film is therefore manufactured using a material which is as far as possible chemically compatible with both the thermoplastic or elastomer material of the second portion and the composite material of the first portion. Preferably the material of which the film is manufactured is of the thermoplastic type, selected from the group of polymer mixtures based on polyamides, polyesters, polyolefins, substituted polyolefins, polyurethanes or copolymers such as ABS.

According to another aspect of the invention the film may comprise a first and a second layer of different materials selected in such a way as to have the greatest possible compatibility with the materials selected in manufacture of the first and second portion. For example the film obtained by a coextrusion technique may comprise a polyolefin based layer and a polyamide-based layer or a polyamide-based layer and a polyurethane-based layer or, again, a polyamide-based layer and an ABS-based layer.

According to a further aspect of the invention, the bonding interface between the film and the first portion of composite material of substantially greater extent than the interface between the film and the second portion of thermoplastic or elastomer material.

This feature makes it possible to take advantage of the optimum adhesion per unit surface area between the second portion and the film due to the intrinsically greater compatibility between thermoplastic materials, and to compensate at least partly for a possibly lesser adhesion force per unit surface area between the film and the first portion by means of a greater contact surface area between them.

The optimum ratio between the contact surfaces mentioned above depends on the specific materials used, as well as the specific configuration of the second portion and any mechanical stresses to which it is subjected, however it is essential that the extent of the contact surface area between the film and the first portion should be greater than 1.5 times the extent of the contact surface area between the film and the second portion.

Another aspect of the invention relates to the thickness of the film, which is the result of a compromise between the opposing requirements of not penalising the overall mechanical strength properties of the article (in particular the elastic modulus), which would mean keeping the thickness of the film as small as possible, and the opposite requirement of imparting to it some advantageous characteristics which are inherently lacking in the first structural portion.

This latter aspect derives from the poor abrasion resistance of the composite material and flexural deformations of appreciable magnitude or of a cyclical type.

In fact it is found that coupling a sheet of composite material with a film of thermoplastic or elastomer material of thickness of less than 1.5 mm according to the procedure more particularly described below, the performance of the resulting articles in terms of elastic elongation and resistance to flexural deformation improves.

Without wishing to presume to provide a thorough and exhaustive explanation of the phenomenon, it is reasonable to assume that this is brought about by a better distribution of the elongation stress during flexion of the first portion which in the absence of the film would tend to be located in the boundary area of that portion causing cracks to be established in the long term.

On the basis of the above considerations it has been found that the film thickness should preferably be less than 1.5 mm, and more preferably between 0.3 and 1.0 mm.

The articles according to the invention are manufactured according to the process described below.

First of all a film having the dimensional characteristics and chemical compatibility most appropriate to the materials used for manufacturing the first and second portion is selected.

The film, which is preferably already shaped into its final shape, is then placed in a suitable mould into which the thermoplastic or elastomer material is overinjected (or cast, if appropriate) onto a first side of the same. In this way there is obtained a semi-finished product comprising a film on one side of which the second portion of the final article is defined. Of course manufacture of the second portion may also take place using successive injections of thermoplastic materials having different characteristics, including colour.

The semi-finished product obtained from this first stage is then positioned in the second mould and a precursor of the composite material is placed on the side of the film opposite that on which the thermoplastic or elastomer material was injected.

It will be noted that the presence of possible projecting bodies constituting the second portion of the final article on this first side of the film allows more rapid and accurate centering of the semi-finished product in the mould where formation of the first portion takes place.

The above-mentioned precursors of the composite material, which are widely known and used within the industry, substantially comprise a fibre substrate (fabric or felt mat) impregnated with the base components of the final polymer or with a polymer in an incompletely polymerised state (so-called preimpregnated materials or "prepregs").

Preferably the precursor comprises a carbon fibre substrate impregnated with the components of an epoxy or polyester resin.

The precursor is then caused to react in such a way as to form the polymer matrix of the composite material comprising the first portion of the final article. This reaction is carried out in accordance with parameters which are in themselves known, for example raising the mould to a temperature of approximately 130°C at a suitable pressure and for a suitable period of time. This may also be carried out in an autoclave, in a mould with a male and female die or under vacuum, or again through the RTM ("resin transfer moulding") technique.

The polymer which forms effectively adheres to the surface of the film, forming the bond with the semi-finished product.

In a variant embodiment of this process it is provided that the film is first bonded to the first portion of composite material and overinjection (or casting) of the thermoplastic or elastomer material necessary for forming the second portion of the final article on the opposite side of the film is only carried out in a second stage.

The process of manufacture described above makes it possible to obtain many advantages, including the possibility of using film of the most suitable thickness without limitations due to the production process. It is known in fact that the required film thickness is generally less than the minimum thickness which can normally be obtained through the technique of injecting or casting thermoplastic or elastomer materials.

It is also known that manufacture of the second portion of thermoplastic or elastomer material by moulding makes it possible to obtain bodies of complex geometry, having a continuously or discontinuously variable cross-section, such as appendages, projections and other similar bodies projecting from the first portion of composite material, in a relatively simple way.

### Brief description of the drawings

Other advantages and characteristics of the present invention will become clear from the following detailed description which is given with reference to the appended drawings which are provided purely by way of non-limiting example and in which:
- Figure 1 is a diagrammatical view in longitudinal cross-section of a first embodiment of an article having an integrated structure manufactured according to this invention,
- Figure 2 is a diagrammatical view in longitudinal cross-section of a second embodiment of an article having an integrated structure manufactured according to this invention,
- Figures 3a and 3b are perspective views of a third embodiment of an article having an integrated structure manufactured according to this invention, in an exploded and assembled configuration respectively,
- Figure 4 is a diagrammatical view in cross-section of a fourth embodiment of an article having an integrated structure manufactured according to this invention,
- Figures 5a and 5b are diagrammatical views in perspective and longitudinal cross-section respectively of a fifth embodiment of an article having integrated structure manufactured according to this invention,
- Figures 6a and 6b are diagrammatical views in perspective and transverse cross-section respectively of a sixth embodiment of an article having an integrated structure manufactured according to the invention,
- Figure 7a is a perspective view of a seventh embodiment of an article having an integrated structure manufactured according to this invention,
- Figures 7b and 7c are views in cross-section of corresponding details of the article in Figure 7a,
- Figures 8a and 8b are diagrammatical views in perspective and transverse cross-section respectively of an eighth embodiment of an article having an integrated structure manufactured according to this invention,
- Figure 9 is a view in transverse cross-section of a variant embodiment of the article in Figures 8a and 8b,
- Figures 10a and 10b are diagrammatical views in plan and exploded lateral elevation respectively of a ninth embodiment of an article having integrated structure not in accordance with this invention,
- Figures 11a and 11b are diagrammatical views in plan from above and longitudinal cross-section respectively of a tenth embodiment of an article having an integrated structure manufactured according to this invention,
- Figures 12a, 12b and 12c are diagrammatical views in lateral elevation, perspective from above and cross-section respectively of an eleventh embodiment of an article having an integrated structure manufactured according to this invention.

### Preferred embodiments of the invention

In the preferred embodiments described below, articles having an integrated structure obtained according to this invention in which a first portion having a substantially structural function and therefore made of composite material, at least a second portion made of thermoplastic or elastomer material and a film located between the first and the second portion can always be identified.

Thus where not otherwise indicated the characteristics and properties of the components of the articles below respectively identified as the first and second portion and as film may be determined from the general considerations set out above. The process for the production of such articles may likewise be determined by analogy.

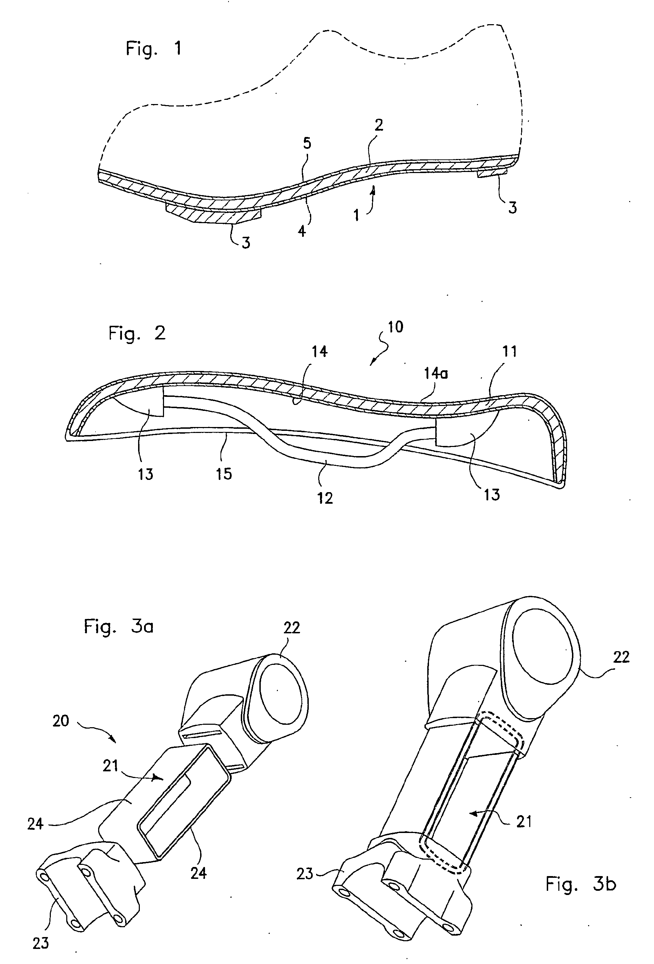

With reference initially to Figure 1, 1 indicates as a whole a sole of a sports shoe for the sport of cycling, representing a first embodiment of an article having an integrated structure manufactured according to this invention.

Sole 1 comprises an outsole 2, of sheet form and substantially rigid, to which are attached corresponding supporting elements 3 projecting from outsole 2 to assist the user when walking are attached to a toe area and to a heel area of the same.

Outsole 2 is designed to impart the required mechanical strength properties to sole 1, as a result of which it is made of composite material, being identified as the first portion of the article having an integrated structure according to the invention.

Supporting members 3 are instead manufactured from thermoplastic or elastomer material, preferably having a polyurethane base, forming the second portion of the article having an integrated structure according to the invention.

Sole 1 also comprises a film 4 located between outsole 2 and supporting members 3 and manufactured from a material which is as compatible as possible both with the thermoplastic or elastomer material of supporting members 3 and the composite material of outsole 2.

Film 4 has a thickness of between 0.3 and 0.8 mm and is bonded to outsole 2 over the entire outer surface area of the same so that the ratio of the bonding surface area between film 4 and outsole 2 and the bonding surface area between film 4 and each supporting member 3 is greater than 1.5.

It will be noted that in cases such as this in which the second portions are more than one, the aforesaid ratio must be correctly calculated separately for each of these second portions.

It will also be noted that the presence of film 4 on the outside of outole 2 and in the areas not corresponding to supporting members 3 makes it possible to achieve further advantages, including a first protection of outsole 2 from abrasive action and the possibility of reproducing marks and logos on the surface of film 4 in contact with outsole 2. In this way these reproductions will be both adequately protected and clearly visible from the outside of sole 1 through film 4 (which of course must be optically transparent) at the same time.

Preferably a second film 5 is bonded to outsole 2 on the side opposite film 4.

Sole 1 is produced according to the process described above, with a first phase of overinjection of supporting members 3 on a first side of film 4, which has preferably already been shaped into its final shape, yielding a semi-finished product, and a subsequent stage of inserting the semi-finished product into the second mould where a preimpregnated material having a percentage of carbon fibre of a continuous type of between 50% and 70% is placed on the opposite side of film 4. Outsole 2 is therefore obtained by raising the mould to temperatures and pressures such as to cause the preimpregnated material to polymerise.

The polymer which forms adheres effectively to the surface of film 4, making the bond with the semi-finished product.

It will also be noted that, advantageously, the presence of supporting members 3 allows for faster and more accurate centering of the semi-finished product in the mould in which polymerisation of the preimpregnated material takes place.

Figure 2 indicates as a whole by 10 a bicycle saddle showing a second embodiment of this invention.

Saddle 10 comprises a sheet 11, suitably shaped to form the seat of the saddle, and a pair of supporting rods 12 attached to sheet 11 and to a bicycle frame (not shown).

Rods 12 extend longitudinally from the side opposite the surface of the seat defined by sheet 11 and are connected thereto by means of anchoring members 13 projecting from sheet 11. Anchoring members 13 are provided with corresponding seats in which the opposite extremities of supporting rods 12 engage.

Sheet 11 constitutes the first portion of saddle 10 having a structural function and similarly to outsole 2 in the preceding embodiment it is suitably manufactured from composite material.

Each anchoring member 13 is in turn made of thermoplastic material, and thus forms the second portion of the article having an integrated structure according to the invention.

Between sheet 11 and anchoring members 13 there is placed a film 14 which again in this case preferably covers the entire lower surface area of sheet 11. Advantageously a second film 14a covers the upper surface of sheet 11. This makes it possible to obtain a saddle with improved elongation and flexibility properties and with greater protection of sheet 11 against abrasion.

Preferably, a protective and containing edge 15, also made of thermoplastic or elastomer material, is provided along the perimeter of sheet 11. This edge reduces opportunities for the tearing of sheet 11, and if this should tear it in any event holds the torn edges preventing them from injuring the user sat on saddle 10.

Saddle 10 is produced in a similar way to sole 1, comprising a stage of overinjecting thermoplastic or elastomer material onto a first side of film 14 to produce a semi-finished product comprising the film and anchoring members 13, followed by a stage of reacting a precursor of the composite material suitably located on the side of film 14 opposite to members 13.

Figures 3a and 3b illustrate a third embodiment of an article having an integrated structure according to the invention, indicated as a whole by 20. This article is a connecting member between the handlebars of a bicycle and a corresponding frame thereof.

Connecting member 20 comprises a sleeve 21 whose opposite extremities 21a, 21b are incorporated in attachment members 22 and 23 which can respectively be attached to the handlebars and the frame of the bicycle (neither of which are shown in the appended figures).

Sleeve 21 forming the first portion having a structural function of connecting member 20 is made of composite material, while attachment members 22, 23 projecting from the first portion constitute the second portions made of thermoplastic material.

A film 24, similar to film 4 and 14, is placed between attachment members 22, 23 and sleeve 21 and covers the entire outer surface of sleeve 21.

The manufacture of connecting member 20 differs from the process described in the preceding examples in that film 24 is in a first stage bonded to the first portion of composite material through the polymerisation of a precursor material placed on one side of the film.

Subsequently the semi-finished product so obtained is overinjected with thermoplastic material to form attachment members 22, 23, which surround the corresponding extremities of sleeve 21 in order to provide a better grip on sleeve 21.

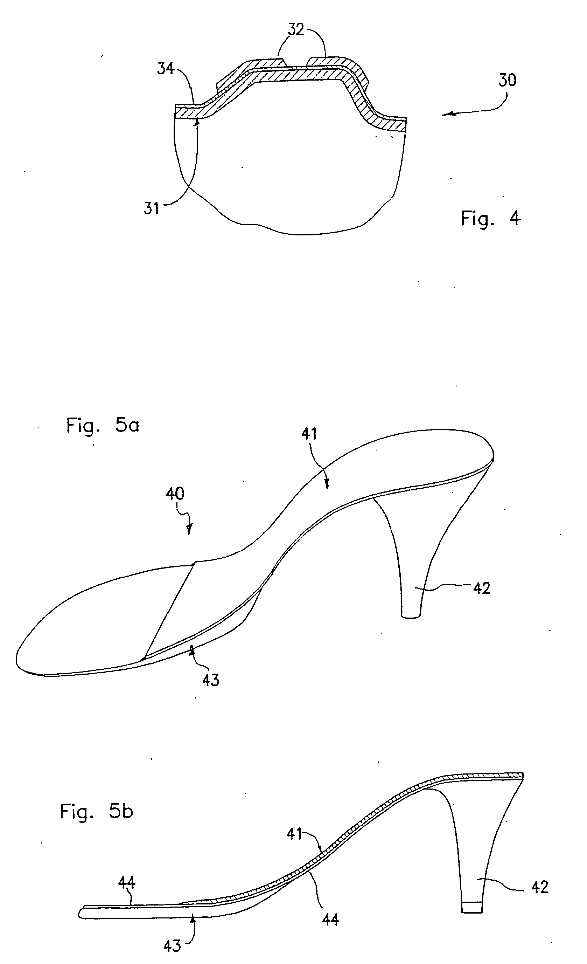

Figure 4 shows a protective member 30 forming a fourth embodiment of an article having an integrated structure according to this invention.

Protective members of the type described here may be specifically dimensioned for protection of the knees, elbows and other parts of the body, and are commonly used in the practice of various sporting disciplines such as motorcycling, skating, hockey, etc.

Protective member 30 comprises a first portion 31 having a structural function which imparts the required mechanical strength properties and is therefore made of composite material, and a second portion 32 projecting from first portion 31 and made of thermoplastic material in order to impart adequate abrasion resistance to member 30.

Second portion 32 also performs decorative functions and may be used for reproduction of the manufacturer's logos or trade marks and may be manufactured using colouring agents and different materials.

Again in this case a film 34 of thermoplastic or elastomer material extending so as to cover the entire outer surface area of structural portion 31 is located between first portion 31 and second portion 32.

Figures 5a and 5b illustrate a sole for ladies footwear 40, representing a fifth embodiment of an article having an integrated structure manufactured according to the invention.

Sole 40 comprises a structural topsole 41 made of composite material to which are coupled a heel 42 and a toe portion 43 made of thermoplastic or elastomer materials which are different from each other.

Heel 42 is in fact made from rigid thermoplastic material, for example polystyrene, ABS, polycarbonate or polyamide, while toe portion 43 is made of soft and flexible thermoplastic material, or vulcanised rubber.

Toe portion 43 only partly overlaps structural topsole 41, the latter only extending as far as the area of normal bending of sole 40 during walking.

It will be noted that toe portion 43 does not have a constant cross-section along the longitudinal extent of sole 40. In fact in the area of overlap with topsole 41 this gradually thins in the vicinity of heel 42 to end at the neck zone of sole 40.

Between topsole 41 (first portion of the article according to the invention) and heel 42 and toe portion 43 (second portions of the article according to the invention) there is placed a film 44 of thermoplastic material which extends over the entire lower surface of structural topsole 41 and extends so as to cover toe portion 43 even in the area where there is no overlap with topsole 41.

In order to optimise the overall number of moulds used, the production of soles 40 provides for overinjection of toe portion 43 onto a first side of film 44 followed by formation of structural topsole 41 on the opposite side thereof and then by the injection of heel 42 onto the first side of film 44.

It is also possible to manufacture men's footwear in a substantially similar way.

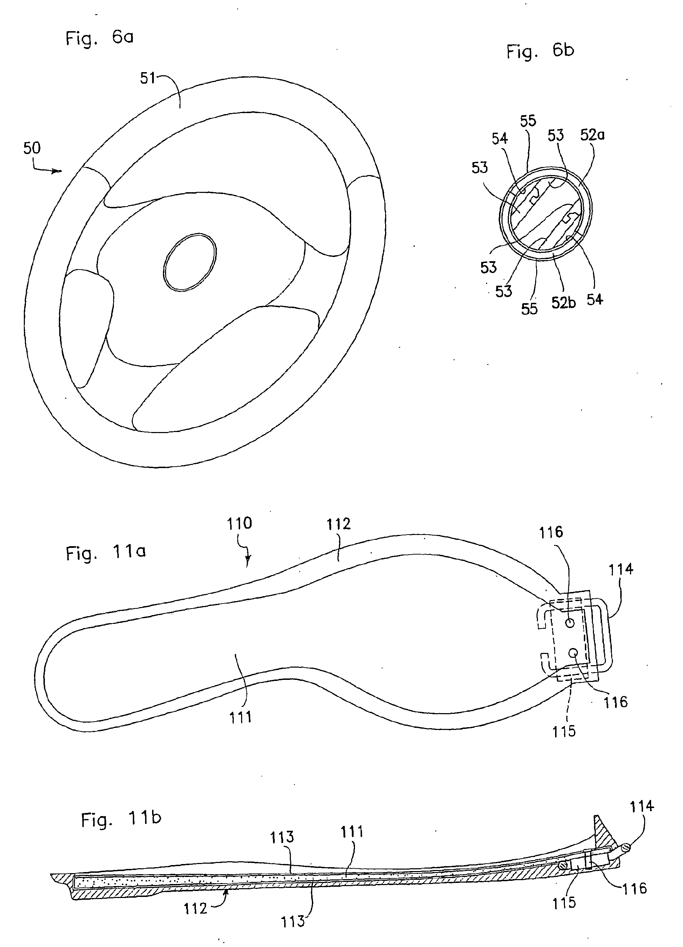

Figures 6a and 6b illustrate a steering wheel 50 for motor vehicles, representing a sixth embodiment of this invention. Steering wheel 50 comprises a tubular body 51 forming a sector of steering wheel 50 formed by a pair of shells 52a, 52b of semicircular cross-section held together by means of appendages 53 projecting from each shell towards the interior of tubular body 51 and capable of attachment to each other.

Shells 52a, 52b illustrate the first portion of composite material having a structural function, while appendages 53 constitute the second portions made of thermoplastic material.

Between each shell 52a, 52b and corresponding appendages 53 there is placed a first film 54 which covers the entire inner (concave) surface of the shells. The second film 55 is also coupled with the outer (convex) surface of the shells so as to impart a better feel to the steering wheel and to contain any roughness which might originate in shells 52a, 52b.

The manufacture of tubular body 51 provides for the overinjection of appendages 53 onto a first side of film 54, its insertion into a second mould where the precursor material intended to form shell 52a or 52b is placed on its opposite side, and, finally, second film 55 on the side of precursor material opposite film 54. The mould is then closed and subjected to temperature and pressure conditions such as to bring about formation of the composite material forming shells 52a, 52b.

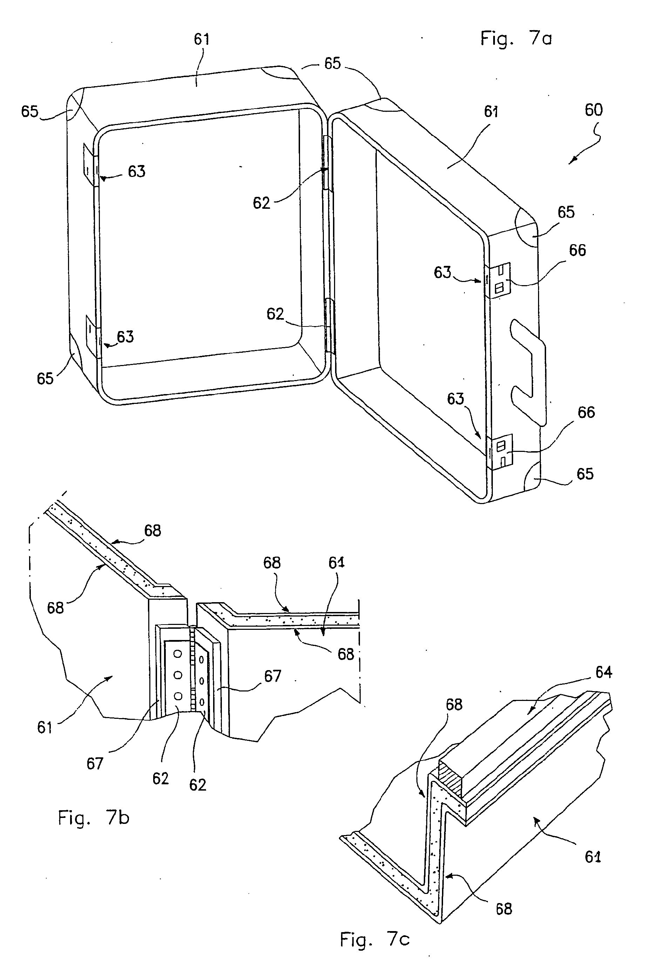

Figures 7a, 7b and 7c illustrate a suitcase 60, representing a seventh embodiment of this invention.

Suitcase 60 comprises a pair of half-shells 61 made of composite material which are hinged together through a hinge 62 and which can be closed through a lock 63.

Suitcase 60 also comprises a plurality of components made of thermoplastic or elastomer material constituting the respective second portions of the article having an integrated structure of this embodiment of the invention.

These components are for example the seal 64 running along the free edge of half shells 61, the corner protectors 65, the seats 66 housing lock 63, and attachment members 67 for hinge 62.

As far as this latter component is concerned, it will be noted that this is made necessary because of the intrinsic brittleness of the composite material, which would tend to break when subjected to the action of tightening the fixing screws for hinge 62.

In a similar way to the previous examples a film 68 of thermoplastic material which again in this case extends to cover all of the inner surface and the outer surface of half-shells 61 is placed between half-shells 61 and the plurality of components of thermoplastic or elastomer material.

Similar containers such as beauty cases, jewel cases, etc., and other similar containers may of course be made in a substantially similar way to suitcase 60.

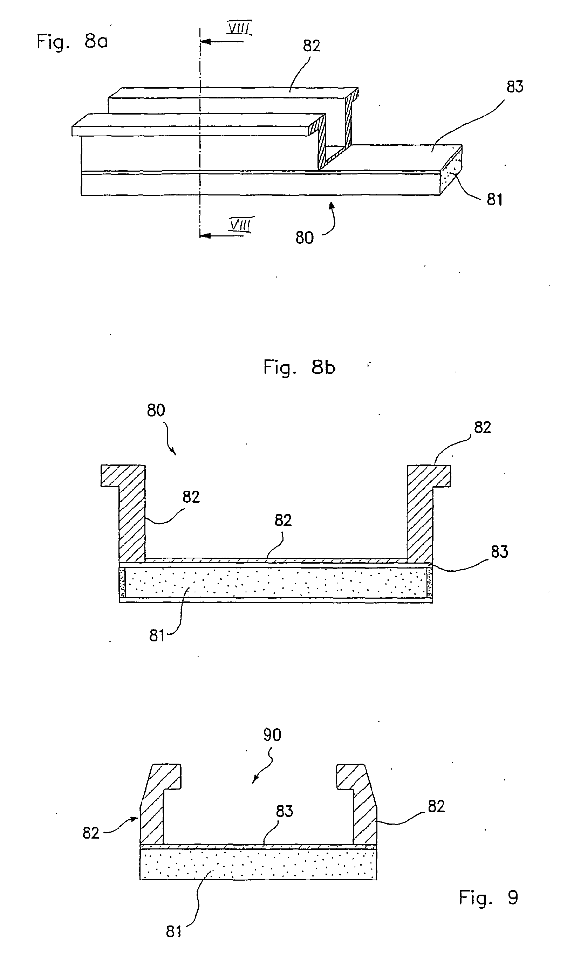

Figures 8a and 8b illustrate a ski binding plate 80 representing an eighth embodiment of this invention.

Plate 80 comprises a core 81 of composite material onto which there is overinjected a slide guide 82 of thermoplastic material with a U-shaped overall transverse cross-section.

In a similar way to the previous examples, a film 83 of thermoplastic material is placed between the composite material and the slide guide.

A variant embodiment of the binding plate described above is indicated by 90 in Figure 9, in which the same reference numbers are used to indicate components which are analogous to the plate in the preceding embodiment.

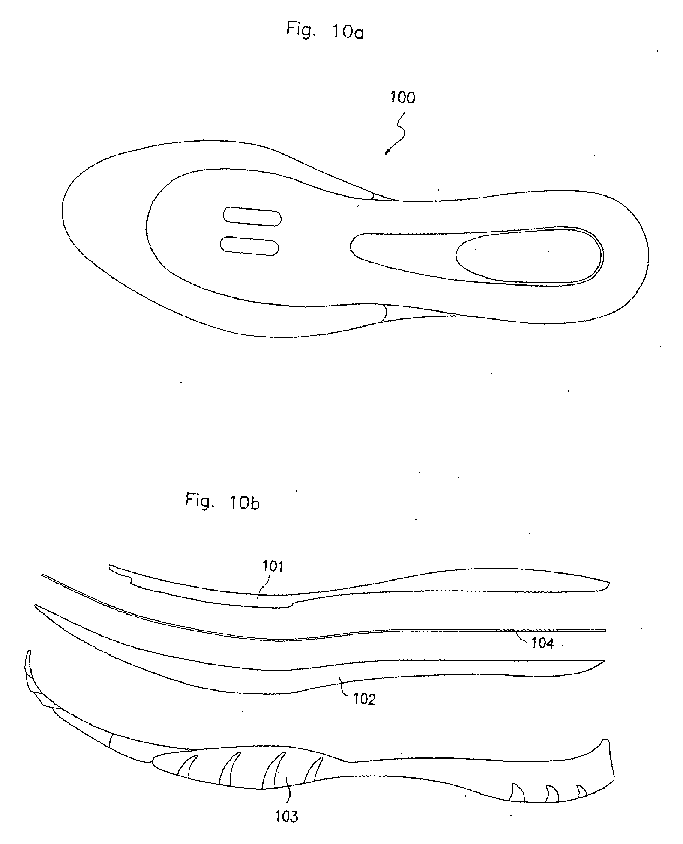

Figures 10a and 10b indicate as a whole by 100 a sole for footwear intended for the sporting practice of mountain biking representing a ninth embodiment of an article having an integrated structure not in accordance with the invention.

Sole 100 includes a structural topsole 101 of composite material, a midsole 102 made of thermoplastic material and bonded to topsole 101, and an outsole 103 of elastomer material bonded to intermediate midsole 102 on the opposite side of topsole 101.

Intermediate midsole 102 has a cross-section with variable thickness such as to impart an anatomical shape to sole 100.

In accordance with this invention a film 104 of thermoplastic material is placed between midsole 102 and topsole 101.

Figures 11a and 11b indicate as a whole by 110 a sole for footwear intended for the sporting practice of cross-country skiing, representing the tenth embodiment of an article having an integrated structure according to the invention.

Sole 110 comprises a topsole 111 of composite material, an outsole 112 of elastomer material, for example thermoplastic rubber (TPR) bonded onto one side of topsole 111 surrounding the same along its entire perimeter, together with a film 113 of thermoplastic material placed between topsole 111 and outsole 112.

Preferably film 113 extends so as to also cover the side of topsole 111 opposite outsole 112. It is also provided that topsole 111 can be completely embedded in outsole 112.

Sole 110 also comprises a hook 114 in the toe zone partly projecting from topsole 111 and outsole 112 which is capable of being engaged by an attachment of the cross-country ski. Hook 114 is supported by metal plate 115 embedded in outsole 112 and fixed to topsole 111 for example by means of a pair of rivets 116.

Topsole 111, which extends over the entire length of the sole, has a thickness which decreases from the heel area of the sole to the toe area thereof, where it overlies and is secured to plate 115.

The change in the thickness of topsole 111 and the extent of the area of overlap between the same and plate 115 are such as to ensure the desired rigidity of sole 110 in the heel and toe areas while at the same time satisfactory flexibility is maintained in the metatarsal area immediately adjacent to the toe area such as to allow flexion of the athlete's foot when performing the technical manoeuvres typical of that sport. At the same time, advantageously, adequate torsional rigidity is imparted to sole 110 to safeguard the ankle joint.

Provision of the rib-reinforced midsoles normally used to manufacture soles for footwear suitable for the practice of cross-country skiing is avoided in this way.

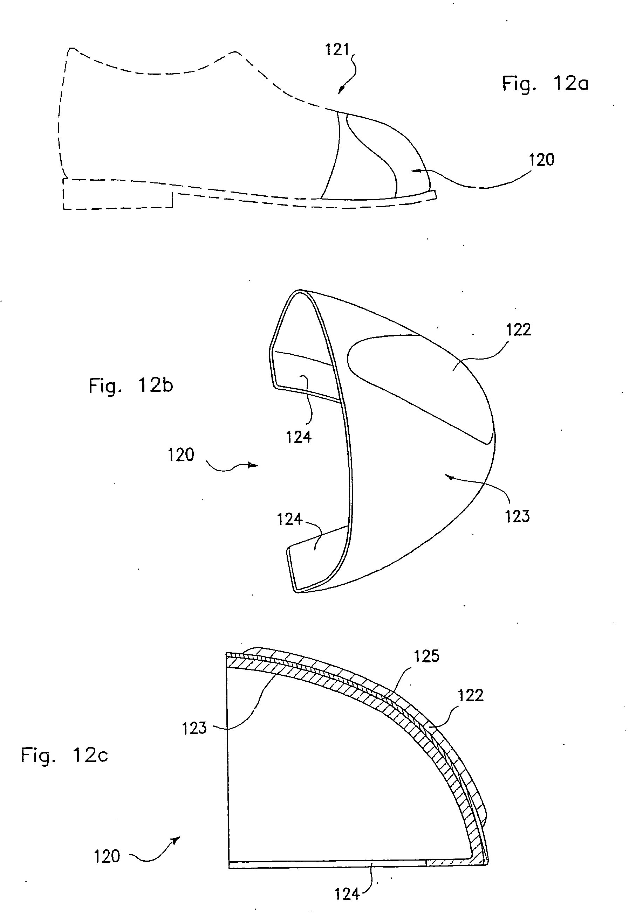

Figures 12a and 12b illustrate a toe 120 of safety footwear indicated as dashed lines as 121 comprising an eleventh embodiment of an article having an integrated structure according to the invention.

Toe 120 in turn comprises a cap 122 of composite material which is bonded to a principal portion 123 of thermoplastic material.

Principal portion 123 is made by injection moulding in such a way as to impart the final shape upon toe 120 and provides a pair of flanges 124 folded inwards which can be bonded between a sole and a topsole of the shoe.

Cap 122 is bonded to principal portion 123 in an upper part thereof to provide better protection for the foot when underneath any external loads.

A film 125 made of thermoplastic material is also placed between cap 122 and principal portion 123, according to this invention. Thanks to toe 120 it is possible to avoid the use of conventional reinforcing toes which may sometimes be made of steel, this being very heavy, or of plastics material, for which however very substantial thicknesses are required, or again of glass or carbon fibre, which are very costly.

This invention therefore overcomes the problem complained of above with reference to the cited prior art, while at the same time offering many advantages.

## Claims

1. An article having an integrated structure comprising a first portion (2, 11, 21, 31, 41, 52, 61, 81, 101, 111, 122) made of composite material, at least a second portion (3, 13, 22, 23, 32, 42, 43, 53, 64, 82, 102, 112, 123) made of thermoplastic or elastomer material injection moulded or cast onto the said first portion, and a polymer film (4, 14, 24, 34, 44, 54, 68, 83, 104, 113, 125) compatible with the materials of the said first and second portions placed between the said first and second portions to improve the bond between the said portions, **characterised in that** the contact surface area between the said film and the said first portion is greater than 1.5 times the contact surface area between the said film and the said at least one second portion.

2. An article according to claim 1, in which the said second portion comprises a body (3, 13, 32, 53, 64) projecting from the said first portion.

3. An article according to claim 1 or 2, in which the said at least one second portion has a variable cross-section.

4. An article according to claims 1, 2 or 3, in which the said film has a thickness of less than 1.5 millimetres.

5. An article according to claim 4, in which the said film has a thickness of between 0.3 and 1.0 millimetres.

6. An article according to one or more of the preceding claims, in which the said first portion is in the form of a sheet.

7. An article according to one or more of the preceding claims, in which the said composite material is based on thermosetting resin.

8. An article according to claim 7, in which the said composite material is based on epoxy or polyester resin.

9. An article according to one or more of the preceding claims, in which the said at least one second portion is made of a thermoplastic or elastomer material selected from the group comprising polymer r mixtures based on polyamide, polyester, polyolefin, substituted polyolefin or polyurethane, or copolymers such as ABS.

10. An article according to one or more of the preceding claims, in which the said polymer film is made of thermoplastic material selected from the group comprising polymer mixtures having a polyamide, polyester, polyolefin, substituted polyolefin or polyurethane base or a base of copolymers such as ABS.

11. An article according to one or more of the preceding claims, in which the said film comprises superimposed layers of different material.

12. An article according to one or more of the preceding claims, in which the said first portion is further coupled with a second film (5, 14a, 55) of thermoplastic material on the side opposite to that to which it is coupled with the said film.

13. An article according to one or more of the preceding claims, in which the said article is a sole for footwear (1, 40, 110, 100).

14. An article according to claim 13, in which the said footwear is a sport footwear, the said sole (1) comprising an outsole (2) comprising the said first portion and at least one appendage (3) projecting from the said outsole comprising the said at least one second portion.

15. An article according to one or more of claims 1 to 12, in which the said article is a bicycle saddle (10).

16. An article according to claim 15, in which the said saddle (10) comprises a sheet (11) constituting the said first portion and at least one anchoring member (13) constituting the said at least one second portion, the said at least one anchoring member projecting from the said sheet and being capable of engaging rods (12) supporting the said saddle.

17. An article according to one or more of claims 1 to 12, in which the said article is a member (30) protecting parts of the body, comprising a first portion (31) having a structural function and at least one second portion (32) of thermoplastic or elastomer material projecting from the said first structural portion and resisting abrasion.

18. An article according to one or more of claims 1 to 12, in which the said article is a binding plate (80, 90) for skis comprising a core (81) comprising the said first portion and a slide guide (82) comprising the said at least one second portion.

19. An article according to one or more of claims 1 to 12, in which the said article is a reinforced toe (120) for safety footwear.

20. A process for the production of the article according to claim 1 comprising the steps of:
a. providing a polymer film (4, 14, 24, 34, 44, 54, 68, 83, 104, 113, 125) which is compatible with the composite material of the said first portion and the thermoplastic or elastomer material of the said second portion,
b. placing the said at least one second portion of thermoplastic or elastomer material on a first side of the said film by injection moulding or casting, obtaining a semi-finished product of the said article,
c. placing a precursor of the composite material on the said semi-finished product on the side of the said film opposite the said at least one second portion, and
d. reacting the said composite material precursor to obtain the said first portion.

21. A process according to claim 20, in which the said polymer film is obtained by the coextrusion of two or more materials.

## Patentansprüche

1. Gegenstand, der eine integrierte Struktur besitzt, umfassend einen ersten Abschnitt (2, 11, 21, 31, 41, 52, 61, 81, 101, 111, 122), der aus einem Verbundmaterial gemacht ist, mindestens einen zweiten Abschnitt (3, 13, 22, 23, 32, 42, 43, 53, 64, 82, 102, 112, 123), der aus thermoplastischem oder Elastomermaterial gemacht ist, das an den ersten Abschnitt spritz-geformt oder -gegossen ist und einen Polymerfilm (4, 14, 24, 34, 44, 54, 68, 83, 104, 113, 125), der kompatibel mit den Materialien der ersten und zweiten Abschnitte ist und zwischen dem ersten und zweiten Abschnitten angeordnet ist, um die Bindung zwischen den Abschnitten zu verbessern,
**dadurch gekennzeichnet, dass**
der Kontaktoberflächenbereich zwischen dem Film und dem ersten Abschnitt größer als 1,5 mal der Kontaktoberflächenbereich zwischen dem Film und dem mindestens einen zweiten Abschnitt ist.

2. Gegenstand nach Anspruch 1, wobei der zweite Abschnitt einen Körper (3, 13, 32, 53, 64) umfasst, der von dem ersten Abschnitt hervorsteht.

3. Gegenstand nach Anspruch 1 oder 2, wobei der mindestens eine zweite Abschnitt einen veränderlichen Querschnitt besitzt.

4. Gegenstand nach Ansprüchen 1, 2 oder 3, wobei der Film eine Dicke von weniger als 1,5 Millimetern besitzt.

5. Gegenstand nach Anspruch 4, wobei der Film eine Dicke zwischen 0,3 und 1,0 Millimetern besitzt.

6. Gegenstand nach einem oder mehreren der vorhergehenden Ansprüche, wobei der erste Abschnitt die Form eines Blatts aufweist.

7. Gegenstand nach einem oder mehreren der vorhergehenden Ansprüche, wobei das Verbundmaterial auf heißhärtendem Harz basiert.

8. Gegenstand nach Anspruch 7, wobei das Verbundmaterial auf Epoxid- oder Polyesterharz basiert.

9. Gegenstand nach einem oder mehreren der vorhergehenden Ansprüche, wobei der mindestens eine zweite Abschnitt aus einem thermoplastischen oder Elastomermaterial gemacht ist, ausgewählt aus der Gruppe umfassend Polymermischungen basierend auf Polyamid, Polyester, Polyolefin, substituiertes Polyolefin oder Polyurethan, oder Copolymeren wie ABS.

10. Gegenstand nach einem oder mehreren der vorhergehenden Ansprüche, wobei der Polymerfilm aus thermoplastischem Material gemacht ist, ausgewählt aus der Gruppe umfassend Polymermischungen mit Polyamid-, Polyester-, Polyolefin-, Substituiertes-Polyolefin-oder Polyurethan-Basis oder einer Basis von Copolymeren, wie ABS.

11. Gegenstand nach einem oder mehreren der vorhergehenden Ansprüche, wobei der Film übereinander aufgebrachte Schichten unterschiedlichen Materials umfasst.

12. Gegenstand nach einem oder mehreren der vorhergehenden Ansprüche, wobei der erste Abschnitt ferner mit einem zweiten Film (5, 14a, 55) aus thermoplastischem Material, auf der Seite gekoppelt ist, die der Seite, mit welcher er mit dem Film gekoppelt ist, gegenüberliegt.

13. Gegenstand nach einem oder mehreren der vorhergehenden Ansprüche, wobei der Gegenstand eine Sohle für Schuhe (1,40,110,100) ist.

14. Gegenstand nach Anspruch 13, wobei die Schuhe Sportschuhe sind und wobei die Sohle (1) eine Außensohle (2) umfasst, welche den ersten Abschnitt und mindestens einen Fortsatz (3) umfasst, der von der Außensohle hervorsteht und den mindestens einen zweiten Abschnitt umfasst.

15. Gegenstand nach einem oder mehreren der Ansprüche 1 bis 12, wobei der Gegenstand ein Fahradsattel (10) ist.

16. Gegenstand nach Anspruch 15, wobei der Sattel (10) ein Blatt (11), das den ersten Abschnitt bildet und mindestens ein Verankerungsbauteil (13), das den mindestens einen zweiten Abschnitt bildet, umfasst, wobei das mindestens eine Verankerungsbauteil von dem Blatt hervorsteht und dazu ausgebildet ist, den Sattel stützende Stäbe (12) zu fassen.

17. Gegenstand nach einem oder mehreren der Ansprüche 1 bis 12, wobei der Gegenstand ein Bauteil (30) ist, das Teile des Körpers schützt, umfassend einen ersten Abschnitt (31), der eine Strukturfunktion besitzt und mindestens einen zweiten Abschnitt (32) aus thermoplastischem oder Elastomermaterial, der von dem ersten Strukturabschnitt hervorsteht und Abrieb widersteht.

18. Gegenstand nach einem oder mehreren der Ansprüche 1 bis 12, wobei der Gegenstand eine Bindungsplatte (80,90) für Skier ist, die einen Kern (81), der den ersten Abschnitt umfasst, und eine Gleitführung (82) umfasst, die den mindestens einen zweiten Abschnitt umfasst.

19. Gegenstand nach einem oder mehreren der Ansprüche 1 bis 12, wobei der Gegenstand eine verstärkte Spitze (120) für Sicherheitsschuhe ist.

20. Verfahren zur Herstellung des Gegenstands nach Anspruch 1, umfassend die Schritte:
a. Bereitstellen eines Polymerfilms (4, 14, 24, 34, 44, 54, 68, 83, 104, 113, 125) der mit dem Verbundmaterial des ersten Abschnitts und dem thermoplastischen oder Elastomermaterial des zweiten Abschnitts kompatibel ist,
b. Anordnen des mindestens einen zweiten Abschnitts aus thermoplastischem oder Elastomermaterial auf eine erste Seite des Films durch Spritzformen oder -gießen, erhalten eines Halbzeugs des Gegenstands,
c. Anordnen einer Vorstufe des Verbundmaterials auf das Halbzeug auf der Seite des Films, die dem mindestens einen zweiten Abschnitt gegenüberliegt, und
d. Reagieren der Verbundmaterialvorstufe, um den ersten Abschnitt zu erhalten.

21. Verfahren nach Anspruch 20, wobei der Polymerfilm durch Coextrusion mindestens zweier Materialien erhalten wird.

## Revendications

1. Article ayant une structure intégrée comprenant une première portion (2, 11, 21, 31, 41, 52, 61, 81, 101, 111, 122) réalisée en un matériau composite, au moins une seconde portion (3, 13, 22, 23, 32, 42, 43, 53, 64, 82, 102, 112, 123) réalisée en un matériau thermoplastique ou élastomère par moulage par injection ou par moulage sur ladite première portion, et un film de polymère (4, 14, 24, 34, 44, 54, 68, 83, 104, 113, 125) compatible avec les matériaux desdites première et seconde portions, disposé entre les première et seconde portions pour améliorer l'adhésion entre lesdites portions, **caractérisé en ce que** l'aire de surface de contact entre ledit film et ladite première portion est plus grande que 1,5 fois l'aire de surface de contact entre ledit film et ladite au moins une seconde portion.

2. Article selon la revendication 1, dans lequel ladite première portion comprend un corps (3, 13, 32, 53,64) faisant saillie depuis ladite première portion.

3. Article selon la revendication 1 ou 2, dans lequel ladite au moins une seconde portion possède une section transversale variable.

4. Article selon les revendications 1, 2 ou 3, dans lequel ledit film possède une épaisseur de moins de 1,5 mm.

5. Article selon la revendication 4, dans lequel ledit film possède une épaisseur comprise entre 0,3 et 1 mm.

6. Article selon l'une quelconque des revendications précédentes, dans lequel ladite première portion possède la forme d'une feuille.

7. Article selon l'une ou plusieurs des revendications précédentes, dans lequel ledit matériau composite est basé sur une résine thermodurcissable.

8. Article selon la revendication 7 dans lequel le matériau composite est basé sur une résine époxy ou polyester.

9. Article selon l'une quelconque des revendications précédentes, dans lequel ladite au moins une deuxième portion est réalisée en un matériau thermoplastique ou élastomère sélectionné du groupe comprenant des mélanges polymères basés sur du polyamide, du polyester, du polyoléfine, des substituts de polyoléfines, du polyuréthane ou du copolymère tel que de l'ABS.

10. Article selon l'une quelconque des revendications précédentes dans lequel ledit film polymère est réalisé en un matériau thermoplastique sélectionné du groupe comprenant des mélanges de polymère possédant un polyamide, un polyester, une polyoléfine, un substitut de polyoléfine ou à base de polyuréthane ou une base de copolymère tel que de l'ABS.

11. Article selon l'une quelconque des revendications précédentes, dans lequel ledit film comprend des couches superposées de matériau différent.

12. Article selon l'une quelconque des revendications précédentes, dans lequel dans ladite première portion est en outre reliée à un second film (5, 14a, 55) de matériau thermoplastique sur le côté opposé auquel elle est reliée audit film.

13. Article selon l'une quelconque des revendications précédentes dans lequel ledit article est une semelle d'une chaussure (1, 40, 110, 100).

14. Article selon la revendication 13, dans lequel ladite chaussure est une chaussure de sport, ladite semelle (1) comprenant une semelle extérieure (2) comprenant ladite première portion et au moins un appendice (3) faisant saillie depuis la semelle extérieure comprenant ladite au moins une seconde portion.

15. Article selon l'une quelconque des revendications 1 à 12, dans lequel l'article est une selle de bicyclette (10).

16. Article selon la revendication 15, dans lequel ladite selle (10) comprend une feuille (11) constituant ladite première portion et au moins d'un membre d'ancrage (13) constituant ladite au moins une seconde portion, ledit au moins un membre d'ancrage faisant saillie depuis de ladite feuille et étant capable d'être en prise avec des tiges (12) supportant ladite selle.

17. Article selon une ou plusieurs des revendications 1 à 12, dans lequel ledit article est un élément (30) protégeant des parties du corps et comprenant une première portion (31) présentant une fonction structurale et au moins une seconde portion (32) d'un matériau thermoplastique ou élastomère faisant saillie depuis ladite première portion structurale et résistant à l'abrasion.

18. Article selon l'une quelconque des revendications 1 à 12, dans lequel ledit article est une plaque de fixation (80, 90) pour skis comprenant un coeur (81) comprenant ladite première portion et un guide de coulissement (82) comprenant au moins ladite seconde portion.

19. Article selon l'une quelconque des revendications 1 à 12, dans lequel ledit article est un embout renforcé pour des chaussures de sécurité.

20. Procédé pour la production de l'article selon la revendication 1 comprenant les étapes de :
a. fournir un film en polymère (4, 14, 24, 34, 44, 54, 68, 83, 104, 113, 125) qui est compatible avec le matériau composite de ladite première portion et le matériau thermoplastique ou élastomère de ladite seconde portion,
b. placer ladite au moins une seconde portion de matériau thermoplastique ou élastomère sur un premier côté dudit film par moulage par injection ou par moulage, obtenant un produit semi-fini dudit article,
c. placer un précurseur d'un matériau composite sur le produit semi-fini sur le côté dudit film qui est opposé à ladite au moins une seconde portion, et faire réagir ledit précurseur de matériau composite pour obtenir ladite première portion.

21. Procédé selon la revendication 20, dans lequel ledit film polymère est obtenu par coextrusion de deux matériaux ou plus.
